# EUROPEAN PATENT APPLICATION

(11) **EP 4 442 727 A1**
(43) Date of publication of application: **09.10.2024**
(21) Application number: 23166899.7
(22) Date of filing: 06.04.2023
(51) Int. Cl.: C08G 59/40, C08G 59/68, C08G 59/70, C08G 59/72, C09J 163/00

(54) **EPOXY RESIN COMPOSITIONS COMPRISING A LEWIS ACID**

(71) Applicant: 3M Innovative Properties Company, Saint Paul, MN 55133-3427 (US)
(72) Inventor: Ohagen, Paula, 41452 Neuss (DE); Heering, Christian, 41453 Neuss (DE)
(74) Representative: Mathys & Squire

(57) **Abstract**

Compositions is described comprising an epoxy resin; a curative comprising nitrogen groups; a Lewis acid stabilizer; and optionally a toughening agent. The Lewis acid is a compound comprising a metalloid or metal. The Lewis acid stabilizer improves the storage stability. Also described are methods of curing an epoxy resin composition.

## Description

### Summary

In one embodiment, a composition is described comprising an epoxy resin; a curative comprising nitrogen groups; a Lewis acid stabilizer; and a toughening agent. The Lewis acid is a compound comprising a metalloid or metal.

The Lewis acid stabilizer improves the storage stability and is particularly useful for compositions with high concentrations of curatives.

In another embodiment, a composition is described comprising an epoxy resin; a curative comprising nitrogen groups; and a Lewis acid metallic salt. In some embodiments, the Lewis acid metallic salt comprises an organic group comprising 4-30 carbon atoms. In some embodiments, the Lewis acid metallic salt has a solubility in water of at least 5, 10, 25, 50, 100, 200, 300, or 400 g/L at 20°C.

Also described is a method of curing comprising providing an epoxy resin composition as described herein; applying the epoxy resin composition to a substrate; and curing the composition. In some embodiments, the method comprises applying the epoxy resin composition between a first substrate and second substrate thereby bonding the substrates after curing. In some embodiments, the curing comprises induction curing.

### Epoxy Resin

The epoxy resins or epoxides that are useful in the methods and composition may be any organic compound having at least one oxirane ring that is polymerizable by ring opening, i.e., an average epoxy functionality greater than one, and preferably at least two. The epoxides can be monomeric or polymeric, and aliphatic, cycloaliphatic, heterocyclic, aromatic, hydrogenated, or mixtures thereof. Preferred epoxides contain more than 1.5 epoxy group per molecule and preferably at least 2 epoxy groups per molecule. The useful materials typically have a weight average molecular weight of about 150 to about 10,000, and more typically of about 180 to about 1,000. The molecular weight of the epoxy resin is usually selected to provide the desired properties of the cured composition. Suitable epoxy resins include linear polymeric epoxides having terminal epoxy groups (e.g., a diglycidyl ether of a polyoxyalkylene glycol), polymeric epoxides having skeletal epoxy groups (e.g., polybutadiene poly epoxy), and polymeric epoxides having pendent epoxy groups (e.g., a glycidyl methacrylate polymer or copolymer), and mixtures thereof. The epoxide-containing materials include compounds having the general formula: 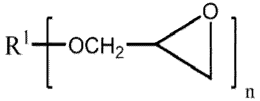 where R1 is an alkyl, alkyl ether, or aryl, and n is 1 to 6.

These epoxy resins include aromatic glycidyl ethers, e.g., such as those prepared by reacting a polyhydric phenol with an excess of epichlorohydrin, cycloaliphatic glycidyl ethers, hydrogenated glycidyl ethers, and mixtures thereof. Such polyhydric phenols may include resorcinol, catechol, hydroquinone, and the polynuclear phenols such as p,p'-dihydroxydibenzyl, p,p'-dihydroxydiphenyl, p,p'- dihydroxyphenyl sulfone, p,p'-dihydroxybenzophenone, 2,2'-dihydroxy- 1, 1 -dinaphthylmethane, and the 2,2', 2,3', 2,4', 3,3', 3,4', and 4,4' isomers of dihydroxydiphenylmethane, dihydroxydiphenyldimethylmethane, dihydroxydiphenylethylmethylmethane, dihydroxydiphenylmethylpropylmethane, dihydroxydiphenylethylphenylmethane, dihydroxydiphenylpropylphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxydiphenylcyclohexane.

Also useful are polyhydric phenolic formaldehyde condensation products as well as polyglycidyl ethers that contain as reactive groups only epoxy groups or hydroxy groups. Useful curable epoxy resins are also described in various publications including, for example, "Handbook of Epoxy Resins" by Lee and Nevill, McGraw-Hill Book Co., New York (1967), and Encyclopedia of Polymer Science and Technology, 6, p.322 (1986).

The choice of the epoxy resin used depends upon the end use for which it is intended. Epoxides with flexibilized backbones may be desired where a greater amount of ductility is needed in the bond line. In some embodiments, the composition is suitable for use as a structural adhesive. Epoxy resins comprising bisphenol moieties, such as diglycidyl ethers of bisphenol A and diglycidyl ethers of bisphenol F, can provide desirable structural adhesive properties that these materials attain upon curing, while hydrogenated versions of these epoxies may be useful for compatibility with substrates having oily surfaces.

Examples of commercially available epoxides useful in the present disclosure include diglycidyl ethers of bisphenol A (e.g, those available under the trade designations EPON 828, EPON 1001, EPON 1004, EPON 2004, EPON 1510, and EPON 1310 from Momentive Specialty Chemicals, Inc., and those under the trade designations D.E.R. 331, D.E.R. 332, D.E.R. 334, and D.E.N. 439 available from Dow Chemical Co.); diglycidyl ethers of bisphenol F (e.g., that are available under the trade designation ARALDITE GY 281 available from Huntsman Corporation); silicone resins containing diglycidyl epoxy functionality; flame retardant epoxy resins (e.g., that are available under the trade designation DER 560, a brominated bisphenol type epoxy resin available from Dow Chemical Co.); and 1,4-butanediol diglycidyl ethers.

Epoxy-containing compounds having at least one glycidyl ether terminal portion, and preferably, a saturated or unsaturated cyclic backbone may optionally be added to the composition as reactive diluents. Reactive diluents may be added for various purposes such as to aid in processing, e.g., to control the viscosity in the composition as well as during curing, to flexibilize the cured composition, and to compatibilize materials in the composition.

Examples of such diluents include: diglycidyl ether of cyclohexanedimethanol, diglycidyl ether of resorcinol, p-tert-butyl phenyl glycidyl ether, cresyl glycidyl ether, diglycidyl ether of neopentyl glycol, triglycidyl ether of trimethylolethane, triglycidyl ether of trimethylolpropane, triglycidyl p-amino phenol, N,N'-diglycidylaniline, N,N,N'N'-tetraglycidyl meta- xylylene diamine, and vegetable oil polyglycidyl ether. Reactive diluents are commercially available under the trade designation HELOXY 107 and CARDURA N10 from Momentive Specialty Chemicals, Inc. The composition may contain a toughening agent to aid in providing the desired overlap shear, peel resistance, and impact strength.

The (e.g. adhesive) composition typically contains one or more epoxy resins having an epoxy equivalent weight of at least 100, 200 or 300 and typically no greater than 1500, 1200, or 1000. In some embodiments, the adhesive contains two or more epoxy resins, wherein at least one epoxy resin has an epoxy equivalent weight of from about 300 to about 500, and at least one epoxy resin has an epoxy equivalent weight of from about 1000 to about 1200.

In some embodiments, the (e.g. structural) adhesive composition comprises one or more epoxy resins in an amount of at least 20, 25 or 30 wt.% and typically no greater than 95, 90, 85, 80, 75, or 70 wt.% of the unfilled (e.g. adhesive) composition or in other words the total amount of organic components except for organic polymeric fillers.

### Epoxy curative

The epoxy resin further comprises one or more curatives. Common classes of curatives for epoxy resins include nitrogen-containing groups such as amines, amides, ureas, and imidazoles. The curing agent is typically highly reactive with the epoxide groups at ambient temperature.

In some embodiments, the curing agent in an amine curing agent that comprises reactive - NH groups or reactive -NR₁R₂ groups wherein R₁ and R₂ are independently H or C₁ to C₄ alkyl, and most typically H or methyl.

One class of curing agents are primary, secondary, and tertiary polyamines. The polyamine curing agent may be straight-chain, branched, or cyclic. In some favored embodiments, the polyamine crosslinker is aliphatic. Alternatively, aromatic polyamines can be utilized.

Useful polyamines are of the general formula R₅-(NR₁R₂)ₓ wherein R₁ and R₂ are independently H or alkyl, R₅ is a polyvalent alkylene or arylene, and x is at least two. The alkyl groups of R₁ and R₂ are typically C₁ to C₁₈ alkyl, more typically C₁ to C₄ alkyl, and most typically methyl. R₁ and R₂ may be taken together to form a cyclic amine. In some embodiment x is two (i.e. diamine). In other embodiments, x is 3 (i.e. triamine). In yet other embodiments, x is 4.

Useful diamines may be represented by the general formula: 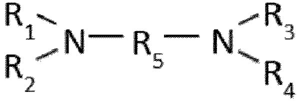 wherein R₁, R₂, R₃ and R₄ are independently H or alkyl, and R₅ is a divalent alkylene or arylene. In some embodiments, R₁, R₂, R₃ and R₄ are each H and the diamine is a primary amine. In other embodiments, R₁ and R₄ are each H and R₂, and R₄ are each independently alkyl; and the diamine is a secondary amine. In yet other embodiments, R₁, R₂, R₃ and R₄ are independently alkyl and the diamine is a tertiary amine.

In some embodiments, primary amines are preferred. Examples include hexamethylene diamine; 1,10-diaminodecane; 1,12-diaminododecane; 2-(4-aminophenyl)ethylamine; isophorone diamine; norbornane diamine 4,4'-diaminodicyclohexylmethane; and 1,3-bis(aminomethyl)cyclohexane. Illustrative six member ring diamines include for example piperazine and 1,4-diazabicyclo[2.22]octane ("DABCO").

Other useful polyamines include polyamines having at least three amino groups, wherein the three amino groups are primary, secondary, or a combination thereof. Examples include 3,3'-diaminobenzidine and hexamethylene triamine.

In some embodiments, the epoxy resin curative is a dicyanamide compound.

Dicyandiamide (DICY or DCD), also known as cyanoguanidine, is the dimer for cyanamide or for cyanoguanidine. Dicyandiamide is white crystalline powder with the molecular formula of C₂H₄N₄ and CAS number 461-58-5. A dicyandiamide can be represented by the following formula: 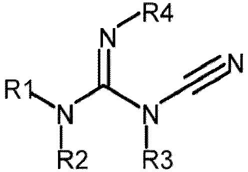 wherein one or more of R1, R2, R3, and R4 are hydrogen and optionally at least one of R1, R2, R3, and R4 is alkyl (e.g. C1-C12), aryl (e.g. phenyl), (e.g. C1-C12)alkylaryl, or (e.g. C1-C12)arylalkyl.

When one or more of R1, R2, R3, and R4 are hydrogen, the dicyandiamide structure has a positive charge. In typical, embodiments, R1 and/or R2 are hydrogen. In some embodiments, R1, R2, R3, and R4 are hydrogen. In other embodiments, R1, R3, and R4 are hydrogen and R2 is alkyl (e.g. C1-C12), aryl (e.g. phenyl), (e.g. C1-C12)alkylaryl, or (e.g. C1-C12)arylalkyl.

Examples of substituted dicyandiamides include for example N-cyano-N'-methylguanidine, 1,3-dimethyl-2-cyanoguanidine, N'-cyano-N,N-dimethylguanidine, N-cyano-N'-ethylguanidine, N-cyano-N'-ethyl-N"-methylguanidine, N-cyano-N'-phenylguanidine, N-cyano-N'-cyclopropylguanidine, N-cyano-N'-cyclohexylguanidine.

In some embodiments, the epoxy resin curative comprises a dicyandiamide cation and an anion selected from sulfonate or phosphonate, as described in US patent application serial no. 63/315,160, filed March 1, 2022; incorporated herein by reference. Such epoxy resin curatives are typically prepared by reacting dicyandiamide with an acid such as sulfonic acid or phosphonic acid.

In some embodiments, the amount of (e.g. dicyandiamide) curative is at least 0.5, 1, 1.5, 2, 2.5, 3.0, 3.5, 4.0, or 5 wt.% of the total epoxy composition. For fast curing rates, it is typically preferred to utilize higher concentrations of curatives and/or an accelerator. In some embodiments, the amount of curative is at least 6, 7, 8, 9, 10, 11, 12, 13, 14, or 15 wt.% of the total epoxy composition. The amount of curative is typically no greater than 20, 19, 18, 17, 16, 15 wt.%. When the composition further comprises an accelerator, the amount of curative may be no greater than 10, 9, 8, 7, 6, or 5 wt.% of the total epoxy composition.

In some embodiments, the curative preferably comprises an accelerator. Various accelerators are known in the art, including the compounds described in US2022/0306837; incorporated herein by reference.

In some embodiments, the accelerator may have the formula: 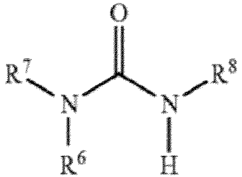
wherein R⁶ and R⁷ are independently hydrogen or C1 to C5 alkyl; and
R⁸ is hydrogen, (e.g. C1 to C15) alkyl, or (e.g. C3 to C15) cycloalkyl, aryl, alkylaryl, or arylalkyl; optionally further comprising a -NHC(O)NR⁶R⁷ substituent.

In some embodiments, R⁶ and R⁷ are independently methyl or ethyl. Of the urea derivatives, aromatic urea derivatives are typically preferred.

In some embodiments, the amount of accelerator is typically at least 0.05, 0.10 or 1 wt.% of the total epoxy composition. In some embodiments, the amount of accelerator is no greater than 2, 1.5, 1, or 0.5 wt.% of the total epoxy composition.
In some embodiments, the curative and optional accelerator are selected such that the (e.g. structural adhesive) epoxy composition cures with 30, 25, 20, 15, or 10 minutes at a temperature within the range of 130-210°C. In some embodiments, the (e.g. structural adhesive) epoxy composition cures at a temperatures less than 160, 155, 150, 145, or 140°C. The cured e.g. structural adhesive) epoxy composition cures has sufficiently high strength as demonstrated for example by high overlap shear value.

### Lewis Acid

The epoxy composition comprises a Lewis Acid stabilizer. A Lewis acid is a compound that can accept a pair of nonbonding electrons.

In some embodiments, the Lewis acid is a compound comprising a metalloid.
A metalloid is a chemical element that has properties of both metals and nonmetals, such as boron. US2022/0306837 describes the use of boronic acids to increase the storage stability of epoxy resin compositions.

As described in US2022/030683, such boronic acids may have the formula 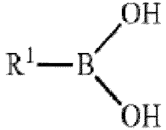
wherein R1 is alkyl, hydroxyalkyl or an aromatic (e.g. phenyl) radical of the following formula 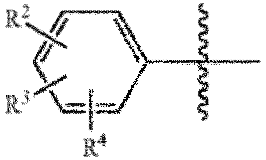
wherein R2, R3 and R4 are independently hydrogen, halide (e.g. fluorine, chlorine, bromine, iodine, cyano, (e.g. C1-C5) alkyl, alkoxy, acyl, alkylsulfonyl, aryl, carboxy, or B(OH)₂ with the proviso that at least one of R2, R3 and R4 is not hydrogen.

Representative boronic acid stabilizers include for example 4-formylphenylboronic acid; 1,4-benzenediboronic acid; 3-fluorophenylboronic acid; 2,4- difluorophenylboronic acid; 2,5-dimethoxyphenylboronic acid; methylboronic acid; 4-ethylphenylboronic acid; 1-octylboronic acid; 2-carboxyphenylboronic acid; 3-carboxyphenylboronic acid; 4-carboxyphenylboronic acid; (2-hydroxymethyl)phenylboronic acid; 4-cyanophenylboronic acid, 4-(methanesulfonyl)phenylboronic acid; 3,4,5-trifluorophenylboronic acid or mixtures thereof.

In other embodiments, the Lewis acid is a compound comprising a metal, such as a metallic salt. In some embodiments, the Lewis acid metallic salt comprises a cation having an atomic number greater than 6 or in other words an atomic number greater than boron. In some embodiments, the Lewis acid metallic salt comprises a metal cation of periods 3-5 (e.g. period 3, period 4, and/or period 5) of the periodic table. For example, the metal cation may be magnesium, zinc, or aluminum.

In some embodiments, the Lewis acid (e.g. metallic salt) comprises an organic group comprising 4-30 carbon atoms. The organic group may be aliphatic, aromatic, or a combination thereof. The organic group may be alkyl, aryl, alkaryl, arylalkyl. Such alkyl and aryl group may further comprise substituents, such as those previously described for R2, R3 and R4 of the boronic acids. The presence of the organic group may improve the compatibility and uniform distribution of the Lewis acid within the epoxy resin. In some embodiments, the Lewis acid or organic group thereof forms a gel with aliphatic and aromatic hydrocarbons, such as in the case of aluminum monostearate. Other Lewis acids that comprise an organic group include metallic salts of sulfonic and phosphonic acids.

In some embodiments, the Lewis acid metallic salt has a solubility in water of at least 5, 10, 25, 50, 100, 200, 300, 400, or 500 g/L at 20°C. In some embodiments, the Lewis acid metallic salt has a solubility in water of at least 750, 1000, 1500, 2000, 2500, 3000, 3500, or 4000 g/L at 20°C. The Lewis acid metallic salt typically has a solubility in water of no greater than about 5000 or 4500 g/L at 20°C. Notably, metallic halides (e.g. chloride) often have greater water solubility than boronic acids and aluminum monostearate. In some embodiments, the Lewis acid metallic salt comprises an anion selected from hydroxide, oxide, or halide. In some embodiments, such as when the cation has a valency of 3 (e.g. aluminum) the Lewis acid metallic salt comprises no greater than two hydroxide groups.

A single Lewis acid stabilizer or a combination of Lewis acid stabilizers may be utilized. The amount of Lewis acid stabilizer is typically at least 0.01, 0.05, 0.1, 0.15, or 0.2 wt.% of the total epoxy composition. In some embodiments, the amount of Lewis acid stabilizer is no greater than 2, 1.5, 1 or 0.5 wt.% of the total epoxy composition.

The Lewis acid stabilizer(s) improves the viscosity stability of the composition. In some embodiments, the composition has a viscosity no greater than 5000, 4500, 4000, 3500, 3000, 2500, 2000, 1500, 100, 500, or 250 pascal seconds after storage for 7 days at 50°C. In some embodiments, the composition has an increase in viscosity of no greater than 5000, 4500, 4000, 3500, 3000, 2500, 2000, 1500, 1000, 500, 250, or 100 pascal seconds after storage for 7 days at 50°C. In some embodiments, the composition has an increase in viscosity of no greater than 2500%, 2000, 1500, 1000, 500, or 250% after storage for 7 days at 50°C. It is appreciated that the amount of viscosity increase that can be tolerated depends on the application method since some application methods require a much lower viscosity than others. In some embodiments, the epoxy compositions exhibit such viscosity stability after 15 days at 50°C.

### Toughening agent

In some embodiments, the epoxy resin composition may comprise a toughening agent, also known as impact modifiers.

Toughening agents are typically low Tg materials, having a Tg less than 0, -5 , -10, -15, or -20°C (as determined by Differential Scanning Calorimetry). In some embodiments, the toughening agents has a Tg of at least -75, -70, -65, -60, -55, or -50°C.

In some embodiments, the toughening agent may be characterized as toughening agent particles. Suitable toughening agent particles include for example core-shell toughening agents, CTBNs (carboxyl and/or nitrile terminated butadiene/nitrile rubbers) and high molecular weight amine terminated polytetramethylene oxide, and any combinations and mixtures thereof. Core-shell impact modifier typically comprise different materials in the inner core region than the outer shell region. In typical embodiments, the core material may be harder than the shell material. The shell may comprise harder material and/or the shell may be layered in its construction. The inner core may comprise a single and/or a plurality of organic polymers and inorganic oxides from the first, second and/or third transition series of the periodic table such as silica, alumina, zirconia, and/or naturally occurring minerals such as feldspars, silicates, aluminates, zirconates, and/or other hardened materials such as carbides, nitrides, silicides, aluminides, and/or some combination thereof and therebetween. The outer soft shell component may comprise rubber such as diene, olefin rubbers, natural rubber, polyisoprene, copolymers thereof, ethylene propylene monomer rubber, diene-acrylonitrile copolymers, copolymers of vinyl aromatic monomers, styrenebutadiene copolymers known as SBR rubbers, and terpolymers of dienes with acrylonitrile or unsaturated esters and styrene or vinyl toluene. The soft shell preferably includes functional groups such as carboxyl, hydroxyl, epoxy, cyanates, isocyanates, amino, and thiol which can react with the epoxy components of the precursor.

Core-shell impact modifiers are commercially available, for example, from Rohm and Hass under the trade designation Paraloid^{™}. CTBN toughening agents react through their carboxyl and/or nitrile functional groups with the epoxide component of the precursor during curing thereby introducing their butadiene/nitrile rubber portion as a soft, shock-absorbing segment into the epoxy network forming a hard segment. CTBN toughening agents/impact modifiers are commercially available, for example, from Hanse Chemie AG, Hamburg, Germany, under the trade designation Albipox^{™}. Similarly, a high molecular weight amine terminated polytetramethylene oxide is commercially available, for example, from 3M Company, St. Paul/MN, USA, under the trade designation "3M EPX^{™} Rubber".

The amount of (e.g. core-shell) toughening agent particles is typically at least 10, 15, 20, 25, 30 or 35 wt.% of the total epoxy resin composition. In some embodiments, the amount of (e.g. core-shell) toughening agent particles is at least 40, 45, 50, 55, or 60 wt.% of the total epoxy resin composition. In some embodiments, the amount of (e.g. core-shell) toughener is no greater than 70, 65, 60, 55, 50, 45, or 40 wt.% of the total epoxy resin composition.

In some embodiments, the (e.g. core-shell) toughening agent particles have a particle size of less than 1 micron, 500 nanometer, or 250 microns.

In some embodiments, the composition comprises a combination of two or more toughening agents that differ in at least one property. In some embodiments, the composition comprises up to 10 wt.% of toughening agent particles having a (e.g. average) particle size of greater than 1, 5, 10, 15, or 20 microns and toughening agent particles having a (e.g. average) particle size of less than 1 micron. The particle size of core-shell toughening agents (e.g. MX types) is described on the supplier data sheets. Particle size can also be determined using a (e.g. Thermo Scientific^{™} Phenom^{™} desktop) scanning electron microscope (SEM) and (e.g. Thermo Scientific Phenom ParticleMetric) software to determine the mean particle size (d50). The circle equivalent diameter can be used as a parameter for measuring the particle size. Typically less than 50 particles are measured in one SEM image to determine the mean particle size.

In some embodiments, the (e.g. smaller) toughening agent may have an average particle size (D50) of at least 50, 75, or 100 nanometers. In some embodiments, the (e.g. smaller) toughening agent may have an average particle size of at least 150 or 200 nanometer. In some embodiments, the (e.g. smaller) toughening agent may have an average particle size no greater than 750 or 500 microns. In some embodiments, the (e.g. smaller) toughening agent may comprise particles ranging in size from 50 to 500 nanometers. The (e.g. smaller) toughening agent may comprise a mixture of first particles having a D50 of ranging from 50 to 150 nm (e.g. 100 nm) and second particles having a D50 ranging from greater than 150 nm to 300 nm (e.g. 200 nm). In some embodiments, the composition comprises at least 25, 30, 35, 40, 45, 50, 55, 60, or 65 wt.% of a (e.g. smaller) toughening agent. In some embodiments, the composition comprises no greater than 75, 70, 65, 60, 55, or 50 wt.% of a (e.g. smaller) toughening agent. In some embodiments, the (e.g. smaller) toughening agent has a glass transition temperature (Tg) of at least -40, -35, -30, -25, or -20°C. The (e.g. smaller) toughening agent may have a Tg no greater than -10, -15, or -20°C. In some embodiments, the (e.g. smaller) toughening agent comprises a core shell toughening agent comprising a polybutadiene core.

The (e.g. larger) toughening agent may have an average particle size (D50) of at least 5, 10, 15, 20, 25, 30, or 35 microns. In some embodiments, the (e.g. larger) toughening agent may have an average particle size of no greater than 100, 75, or 50 microns. In some embodiments, the composition comprises at least 3, 4, 5, 6, 7, 8, 9, or 10 wt.% of a (e.g. larger) toughening agent. In some embodiments, the composition comprises no greater than 20, 15, or 10 wt.% of a (e.g. larger) toughening agent. In some embodiments, the (e.g. larger) toughening agent has a glass transition temperature (Tg) less than -40, -45, or -50°C. The (e.g. larger) toughening agent may have a Tg of at least -75, -70, -65, -60, -55, or -50°C. In some embodiments, the (e.g. larger) toughening agent comprises a methylmethacrylate/butadiene/styrene copolymer.

### Other Components of the Epoxy Resin Composition

The epoxy resin composition may optionally further comprise various additives such as fillers, UV stabilizers, plasticizers (e.g. polybutene, petrolatum, oil) tackifiers, flow control agents, cure rate retarders, adhesion promoters, colorants (e.g. carbon black), (e.g. inorganic) fillers such as (e.g. fumed) silica, (e.g. phlogopite) mica, glass and ceramic microspheres; as well as (e.g. polyethylene) polymeric and inorganic fibers. In some embodiments, the amount of additive(s) is no greater than 5, 4, 3, 2, or 1 wt.% of the total epoxy composition.

In typical embodiments, the desired viscosity of the hydrocarbon is obtained using little or no thixotropic fillers such as silica that typical generate heat during mixing. Thus, the (e.g. adhesive) composition typically comprises no greater than 5, 4, 3, 2, or 1 wt.% of thixotropic fillers.

The epoxy resin composition is typically 100% solids, comprising little or no volatile organic solvent e.g. less than 5, 4, 3, 2, or 1 wt.% volatile organic solvent.

The (e.g. adhesive) epoxy resin composition can be coated on a substrate using conventional coating techniques. For example, these compositions can be applied to a variety of substrates by methods such as roller coating, flow coating, dip coating, spin coating, spray coating, knife coating, and die coating. Coating (dry) thickness typically ranges from 25 (e.g. about 1 mil) to 1500 microns (60 mils). In some embodiments, the coating thickness ranges from about 50 to 350 microns.
The two-part (e.g. adhesive) epoxy resin compositions described herein can be utilized with cartridges as well as dispensing and mixing apparatus that are currently used for two-part epoxy compositions such as depicted and described in WO2021/202485.

The epoxy resin composition can be a one-part or two-part (e.g. adhesive) epoxy resin compositions. The two-part (e.g. adhesive) epoxy resin compositions described herein can be utilized with cartridges as well as dispensing and mixing apparatus that are currently used for two-part epoxy compositions such as depicted and described in WO2021/202485.

In typical embodiments, thermal curing of the epoxy resin occurs after applying the (e.g. adhesive) composition to a substrate.

Epoxy (e.g. adhesive) compositions are typically heat cured with heat from various sources such as an oven or heat air gun. In some emboidments, the epoxy (e.g. adhesive) composition is cured with induction curing that comprises raising the temperature of an electrically conductive (e.g. metal) substrate by subjecting the substrate to an alternating electromagnetic field Induction curing can reduce the amount of time required to cure the epoxy and minimize the effects of heat on surrounding components.

The (e.g. adhesive) composition may be coated upon a variety of substrates. In some embodiments, the substrate or substrate surface comprises metal such as steel, aluminum, copper, and metalized polymer films.

In some embodiment, the composition has an onset temperature of an exotherm as measured by Differential Scanning Calorimetry of less than 180, 175, 170, 165, 160, 155, 150, or 145°C. The onset temperature is typically at least 130, 135, or 140°C. In some embodiments, the composition has a peak temperature of an exotherm as measured by Differential Scanning Calorimetry of less than 190, 185, 180, or 170°C.

The adhesive composition is typically not a pressure sensitive adhesive after curing the epoxy resin. In this embodiment, the storage modulus (G') of the adhesive after curing is at least (e.g. 25°C) 3 × 10⁵ Pa at a frequency of 1 Hz. In some embodiments, the adhesive composition has a storage modulus of a least than 4 × 10⁵ Pa, 5 × 10⁵ Pa, 6 × 10⁵ Pa, 7 × 10⁵ Pa, 8 × 10⁵ Pa, 9 × 10⁵ Pa, 1 × 10⁶ Pa, 2 × 10⁶ Pa, 3 × 10⁶ Pa, 4 × 10⁶ Pa, 5 × 10⁶ Pa or greater after curing. In this embodiment, the adhesive composition may be characterized as a semi-structural or structural adhesive composition.

"Semi-structural adhesives" are those cured adhesives that have an overlap shear strength (according to the test method of the examples) of at least about 0.5, 1 or 1.5 MPa "Structural adhesives" are those cured adhesives that have an overlap shear strength of at least about 5, 10, 15. 20, 25, 30, 35, or 40 MPa. In some embodiments, the overlap shear strength is no greater than about 50 MPa. In some embodiments, the wedge impact peel (WIP) is at least 5, 10, 15, 20, 25, 30, 35, 40 or 45 at 23°C or -40°C. In some embodiments, the T-peel can be at least 150, 200, 250, 300, or 350 Newtons according to DIN EN 1464. The composition may further comprise adhesion promoters to increase the T-peel.

### EXAMPLES

Unless otherwise noted or readily apparent from the context, all parts, percentages, ratios, etc. in the Examples and the rest of the specification are by weight.

**Table 1. Materials used in the Examples and their manufacturers**

| Abbreviation | Material Description and Source |
|---|---|
| 1001F | A low molecular weight solid epoxy resin derived from a liquid epoxy resin and bisphenol-A, obtained under the trade designation "EPON 1001F" from Hexion Specialty Chemicals, Columbus, OH, USA |
| 828 | A medium viscosity liquid epoxy resin produced from bisphenol A resin and epichlorohydrin, obtained under the trade designation "EPIKOTE 828" from Hexion, Columbus, OH, USA |
| DDA 10 | A micronized grade of dicyandiamide epoxy curative, obtained under the trade designation "OMICURE DDA 10" from Huntsman Corporation, The Woodlands, TX, USA |
| ADGA | Adipoguanamine, aromatic amine curative from Invista, Texas, USA |
| RD 24 | Dodecyl and tetradecyl glycidyl ethers, obtained as product "ipox RD 24" from ipox chemicals, Laupheim, Germany |
| MX-153 | A core shell rubber in liquid epoxy resin based on Bisphenol-A, obtained under the trade designation "KANE ACE MX-153" from Kaneka, Westerlo, Belgium having a polybutadiene polymer core, a D50 particle size of 100 nm, and a Tg between -40°C and -20°C |
| MX-257 | A core shell rubber in liquid epoxy resin based on bisphenol-A epoxy, obtained under the trade designation "KANE ACE MX-257" from Kaneka, Westerlo, Belgium having a polybutadiene polymer core, a D50 particle size of 200 nm, and a Tg between -40°C and -20°C |
| B-564 | A methylmethacrylate/butadine/styrene copolymer, obtained under the trade designation "KANE ACE B-564" from Kaneka, Westerlo, Belgium having a D50 particle size of 35 microns and a Tg of -50°C |
| HDK N20 | thixotrope, Wacker |

| Accelerators | |
|---|---|
| | DYHARD^{™} UR400, Methylene diphenyl diisocyanate urea, AlzChem GmbH, Trostberg, Germany |

| Lewis Acids | |
|---|---|
| LA1 | DYHARD^{™} LA1 additive for storage stable prepregs, AlzChem GmbH, Trostberg, Germany |
| ZnO | Zinc oxide, Sigma Aldrich (Merck), Darmstadt, Germany |
| | solubility in water 0.0004% at 17.8°C |
| Mg(OH)₂ | Magnesium hydroxide, Sigma Aldrich (Merck), Darmstadt, Germany |
| | solubility in water 0.00064% at 25°C |
| Al(OH)₃ | Aluminium hydroxide, Sigma Aldrich (Merck), Darmstadt, Germany 0.0001 g/100 mL |
| AMS | Aluminum monostearate Sigma Aldrich (Merck), Darmstadt, Germany Al(OH)₂C18H₂O₂ Insoluble in water. |
| AlCl₃H₁₂O₆ | Aluminium chloride hexahydrate, Sigma Aldrich (Merck), Darmstadt, Germany 1330 g/L at 20°C |
| ZnCl₂ | Zinc chloride, Sigma Aldrich (Merck), Darmstadt, Germany |
| | 432 g/100g (4320 g/L) at 25°C |

### Test Methods

### Viscosity

Using a Anton Paar MCR302 the rheological properties at 23 °C were determined according to DIN 54458, with a set up of 25 mm parallel plate geometry. The A1 value gave the viscosity in Pascal seconds.

### Overlap Shear Strength (OLS) according to DIN EN 1465

The surfaces of the OLS metal sheets (steel, grade DX54+ZMB obtained by Rocholl GmbH, Germany) were cleaned with methyl ethyl ketone to remove any processing fluids. Afterwards, ANTICORIT PL 3802-39 S was applied dropwise on the freshly cleaned and dry surfaces (3 g/m²) and the oil evenly distributed by hand and glove to achieve a fully oil covered surface on the metal sheet. The metal sheets are left at ambient room temperature (23 °C +/- 2 °C, 50% relative humidity +/-5%) for 24 hours prior to testing and the OLS strength is measured as described below.

Overlap shear strength was determined according to DIN EN 1465 using a Zwick Z050 tensile tester (commercially available by Zwick GmbH & Co. KG, Ulm, Germany) operating at a cross head speed of 10 mm/min. For the preparation of an Overlap Shear Strength test assembly, a curable composition is placed onto one surface of a prepared metal sheet. Afterwards, the sample was covered by a second metal sheet forming an overlap joint of 10 mm. The overlap joints are then clamped together using two binder clips and the test assemblies are further stored at room temperature for at least 2 hours after bonding, and then placed into an air circulating oven from Heraeus (Heraeus Deutschland GmbH & Co. KG, Germany) for 30 minutes at 180 °C. The next day, the samples are tested directly. Three samples are measured for each of the examples and results averaged and reported in MPa.

### Induction cure

Test specimens were prepared as described under Overlap Shear Strength (OLS) according to DIN EN 1465 above. Curing was conducted using a device for induction cure (IFF GmbH, Germany) at 140 °C or 150 °C for varying duration. Overlap shear strength was determined as described under Overlap Shear Strength (OLS) according to DIN EN 1465 above.

### Wedge impact peel according to ISO 11343

Substrates for impact peel strength testing are galvanized cold 5 rolled steel (obtained from Rocholl GmbH, Germany). The surfaces of the wedge impact peel metal sheets (steel, grade DX54+ZMB obtained by Rocholl GmbH, Germany) were cleaned with methyl ethyl ketone to remove any processing fluids. Afterwards, ANTICORIT PL 3802-39 S was applied dropwise on the freshly cleaned and dry surfaces (3 g/m²) and the oil evenly distributed by hand and glove to achieve a fully oil covered surface on the metal sheet.

For impact peel strength testing, specimens are prepared and tested in accordance with ISO 11343, using a bonding area of 30×20 mm, an adhesive layer thickness of 0.8 mm and a test speed of 2 m/s. Curing conditions were set to 30 minutes at 180 °C. Cured test specimens were stored at 23 °C +/- 2 °C, 50% relative humidity +/-5%, for 24 hours prior to testing. Wedge impact peel values are reported in N/mm.

### Differential scanning calorimetry (DSC) measurements according to DIN 65467.

The DSC measurements were conducted on a Netzsch DSC 214 Polyma Differential Scanning Calorimeter (commercially available from Netzsch GmbH). Formulation samples for measurements had a mass ranging from 10-20 mg. A heating rate of 5 Kmin⁻¹ was used at a temperature ranging from -20 °C to 300 °C. The DSC onset temperature was calculated for a single peak with the peak temperature determined at the peak maximum. The DSC onset temperature serves as an indicator of the curing performance of the thermal curing system used in the exemplary curable compositions. The DSC onset temperatures are reported in °C.

**Table 2. Epoxy Composition 1**

| **Raw material** | **Weight [g]** | **Weitht%** |
|---|---|---|
| Epon 1001F | 24.00 | 9.2 |
| RD24 | 20.00 | 7.6 |
| Kane Ace MX 257 | 80.00 | 30.6 |
| Kane Ace MX 153 | 80.00 | 30.6 |
| Epikote 828 (DGEBA) resin | 16.00 | 6.1 |
| Nyglos M15 | 6.00 | 2.3 |
| VPS 4721 | 0.60 | 0.2 |
| DYHARD^{™} UR400 | 1.0 | 0.4 |
| LA1 | 0.2 | 0.1 |
| Omicure DDA 10 / Dicyandiamid | 14.00 | 5.3 |
| Kane Ace B 564 | 20.00 | 7.6 |
| | 261.8 | 100 |

Epoxy resins Epon 1001F, Epikote 828, Kane Ace B 564 and Kane Ace resins MX 153 and 257 were weighed into a speedmixer cup and mixed in a speedmixer (Hauschild, Germany) at 3500 s⁻¹ for 3x5 min. The homogeneous mixture was allowed to cool down and Omicure DDA 10, Nygls M15 and VPS 4721 were added to the mixture, speedmixing for another 5 min at 3500 s⁻¹. The hydrocarbons and accelerator and additive were added in a final step and the material speedmixed again at 3500 s⁻¹ for 1 min.

The curing onset temperature of Epoxy Composition 1, as determined by DSC, was 145.2°C.

**Table 3. Epoxy Composition 2 without Tougheners**

| **Raw material** | **Weight [g]** | **Weitht%** |
|---|---|---|
| Epon 1001F | 24.00 | 29.4 |
| RD24 | 20.00 | 24.5 |
| Epikote 828 (DGEBA) resin | 16.00 | 19.6 |
| Nyglos M15 | 6.00 | 7.3 |
| VPS 4721 | 0.60 | 0.7 |
| DYHARD^{™} UR400 | 1.0 | 1.2 |
| LA1 | 0.2 | 0.2 |
| Omicure DDA 10 / Dicyandiamide | 14.00 | 17.1 |
| | 81.8 | 100 |

Epoxy Composition 2 was prepared in the same manner as Epoxy Composition 2 except the toughening agents were omitted.

**Table 4. Overlap Shear (MPa), Epoxy composition thickness 0.8 mm**

| | 140 °C, 15 min | 160 °C, 20 min | 180 °C, 30 min | 200 °C, 45 min |
|---|---|---|---|---|
| Epoxy Composition 1 | 20.1 | 20.5 | 21.7 | 21.8 |
| | All cohesive failure | | | |
| | 180 °C, 30 min | | | |
| Epoxy Composition 2 | 14.1 | | | |
| | Cohesive failure | | | |

**Table 5. Overlap Shear (MPa), Epoxy composition thickness 1.5 mm**

| | 160 °C, 20 min | 180 °C, 30 min | 200 °C, 45 min |
|---|---|---|---|
| Epoxy Composition 1 | 34.9 | 36.9 | 36.8 |
| | All cohesive failure | | |
| | 180 °C, 30 min | | |
| Epoxy Composition 2 | 29.2 | | |

**Table 6. Wedge Impact Peel (N/mm), Epoxy composition thickness 1.5 mm**

| | Temperature °C | 140 °C, 15 min | 140 °C, 30 min | 160 °C, 20 min | 180 °C, 30 min | 200 °C, 45 min |
|---|---|---|---|---|---|---|
| Epoxy Composition 1 | 23 °C | 27.4 | 30.7 | 33.6 | 42.9 | 42.2 |
| Epoxy Composition 1 | -40 °C | 7.1 | 21.1 | 26.8 | 36.4 | 33.9 |
| | | All cohesive failure | | | | |
| | | 180 °C, 30 min | | | | |
| Epoxy Composition 2 | 23 °C | 2.9 | | | | |
| Epoxy Composition 2 | -40 °C | 0.3 | | | | |

**Table 7. Overlap Shear (MPa), Epoxy composition thickness 0.8 mm cured via induction.**

| | Temperature / °C | Holding time / 120 s | Holding time / 180 s | Holding time 240 s |
|---|---|---|---|---|
| Epoxy Composition 1 | 140 | 0 MPa | 1.0 MPa | 3.9 MPa |
| Epoxy Composition 1 | 150 | 3.3 MP | 6.0 MPa | 13.4 MPa |

**Table 8. Epoxy Composition 3**

| | |
|---|---|
| Epikote 828 (DGEBA resin, Hexion) | 20,00 |
| HDK N20 (thixotrope, Wacker) | 1,50 |
| DYHARD^{™} UR400 (substituted urea, accelerator, Alzchem) | 0,10 |
| Omicure DDA 5 (Dicyandiamid, curative, Huntsman) | 1,00 |
| Lewis Acid Additive | 0,10 |

The epoxy resin was put in a Speedmixer cup (Hauschild Engineering), the thixotrope and dicyandiamide were added, and the raw materials mixed at 3500 s⁻¹ for 5 min. The accelerator and the additive were then weighed into the resin formulation and the mixture again speedmixed at 3500 s⁻¹ for 15 s. Formulations were stored at 50 °C. The complex viscosity was determined after 7 d and 15 d.

**Table 9. Viscosity of adhesive formulations stored at 50°C for 7 and 15 days in Pa*s.**

| **Formulation** | **Initial** | **7d (increase in viscosity in %)** | **15 d (increase in viscosity in %)** |
|---|---|---|---|
| Base Epoxy Composition (no Lewis acid additive) | 50 | 99 (198) | 2285 (4570) |
| LA1 | 81 | 148 (182) | 318 (392) |
| ZnO | 48 | 112 (233) | 8273 (17235) |
| Mg(OH)₂ | 50 | 108 (216) | 7353 (14706) |
| Al(OH)₃ | 57 | 116 (203) | 1361 (2387) |
| AMS (Aluminium monostearate) | 53 | 130 (245) | 179 (337) |
| AlCl₃H₁₂O₆ | 48 | 77 (160) | 122 (254) |
| ZnCl₂ | 54 | 76 (140) | 158 (292) |

Epoxy Composition 4 was made in the same manner as Epoxy Composition 2 except that adipoguanamine was used instead of dicyandiamide.

Epoxy Composition 5 was made in the same manner as Epoxy Composition 2 except that DYHARD^{™} UR400 was used instead of dicyandiamide.

**Table 10: Test Result of Epoxy Compositions 4 and 5**

| | OLS* MPa | Wedge Impact Peel 23 °C Nmm⁻¹ | Wedge Impact Peel 40 °C Nmm⁻¹ |
|---|---|---|---|
| Epoxy Composition 4 | 12.9 | 6.2 | 1.7 |
| Epoxy Composition 5 | 8.9 | 11.7 | 3.7 |

| | | | |
|---|---|---|---|
| samples stored at room temperature for 4 hours and circulating oven for 30 minutes at 210°C | | | |

**Table 11. Viscosity of adhesive formulations stored at 50°C for 7 days in Pa*s.**

| | Initial | 7 d at 50 °C (increase in viscosity in %) |
|---|---|---|
| Epoxy Composition 4 without LA 1 | 13 | 13000 (100000) |
| Epoxy Composition 4 | 22 | 2100 (9500) |
| Epoxy Composition 5 without LA 1 | 13 | 20714 (16000) |
| Epoxy Composition 5 | 8 | 22 (275) |

## Claims

1. A composition comprising:
an epoxy resin;
a curative comprising nitrogen-containing groups;
a Lewis acid stabilizer; and
a toughening agent.

2. The composition of claim 1 wherein the amount of curative ranges from 0.5 to 20 wt.%.

3. The composition of claims 1 or 2 wherein the curative comprises a dicyandiamide compound.

4. The composition of claims 1-3 wherein curative further comprises an accelerator.

5. The composition of claims 1-4 wherein the Lewis acid is a compound comprising a metalloid or metal.

6. The composition of claims 1-5 wherein the epoxy resin comprises bisphenol moieties.

7. The composition of claims 1-6 wherein the toughening agent has a Tg less than 0°C.

8. The composition of claims 1-7 wherein the toughening agent comprises particles having a particle size of less than 300 nanometers.

9. The composition of claims 1-8 wherein the composition comprises at least 40, 50, or 60 wt.% of toughening agent particles.

10. The composition of claim 1-9 wherein the composition comprises up to 10 wt.% of toughening agent particles having a particle size greater than 1, 5, 10, 15, or 20 microns.

11. The composition of claim 1-10 wherein the composition has a viscosity no greater than 5000, 4500, 4000, 3500, 3000, 2500, 2000, 1500, 100, 500, or 250 pascals seconds after storage for 7 days at 50°C and/or an increase in viscosity less than the same composition without the Lewis acid stabilizer after storage for 7 days at 50°C.

12. The composition of claims 1-11 wherein the composition cures within 30 minutes at a temperature in a range of 140-210°C.

13. A composition comprising:
an epoxy resin;
a curative comprising nitrogen-containing groups; and
a Lewis acid metallic salt.

14. The composition of claim 13 wherein the Lewis acid metallic salt comprises a cation having an atomic number greater than 6.
